# EUROPEAN PATENT APPLICATION

(11) **EP 4 645 048 A1**
(43) Date of publication of application: **05.11.2025**
(21) Application number: 24795433.2
(22) Date of filing: 05.01.2024
(51) Int. Cl.: G06F 3/04817, G06F 3/04845, G06F 3/0485, G06F 3/04883, G04G 21/00

(54) **FUNCTION SWITCHING METHOD AND APPARATUS, AND ELECTRONIC DEVICE**

(30) Priority: 28.04.2023 CN 202310484120
(71) Applicant: Huawei Technologies Co., Ltd., Shenzhen, Guangdong 518129 (CN)
(72) Inventor: WEI, Kangming, Shenzhen, Guangdong 518129 (CN); LIU, Kai, Shenzhen, Guangdong 518129 (CN); LIU, Yongsheng, Shenzhen, Guangdong 518129 (CN); HAN, Yi, Shenzhen, Guangdong 518129 (CN)
(74) Representative: Goddar, Heinz J.
(86) International application number: PCT/CN2024/070853
(87) International publication number: WO 2024/222043

(57) **Abstract**

This application provides a function switching method and apparatus, and an electronic device, and relates to the field of electronic device technologies. Specifically, the method includes: The electronic device first displays a first interface, where the first interface is a display interface of a first application. Then, the electronic device displays, in the first interface in response to a first operation when detecting that a user initiates the first operation on a first component, a first control that may be used to implement a first function. Further, the electronic device may perform the first function in response to an operation initiated by the user on the first control. The first component may be, for example, a watch crown, and the first operation may be a clockwise rotation operation. In this way, the electronic device can quickly provide the first control to the user in response to the first operation initiated by the user on the first component, so that the user can implement the first function by using the first control, to meet a use requirement of the user. This reduces interactive operations of the user, and improves user experience and playability of the electronic device.

## Description

This application claims priority to Chinese Patent Application No. 202310484120.2, filed with the China National Intellectual Property Administration on April 28, 2023 and entitled "FUNCTION SWITCHING METHOD AND APPARATUS, AND ELECTRONIC DEVICE", which is incorporated herein by reference in its entirety.

### TECHNICAL FIELD

This application relates to the field of electronic device technologies, and in particular, to a function switching method and apparatus, and an electronic device.

### BACKGROUND

With development of wearable device technologies, wearable devices such as a smartwatch and a smart band are increasingly widely applied, and functions are increasingly rich. The smartwatch is used as an example. In addition to displaying time, the smartwatch further has a plurality of functions such as timing, photographing, making a call, receiving and sending information, navigation, step counting, measuring an electrocardiogram, blood pressure, and blood sugar. These functions may be implemented by using application programs (applications for short below) installed in the smartwatch.

However, in a related technology, if a user needs to experience the foregoing another function, the user usually needs to search the smartwatch for an application corresponding to the function. In this way, interactive operations of the user are complex and time-consuming. This reduces human-machine interaction, and also makes the smartwatch fail to quickly start an application to provide a function that the user needs to use.

### SUMMARY

Embodiments of this application provide a function switching method and apparatus, and an electronic device. The function switching method may be applied to an electronic device configured with a first component. The electronic device can display, in response to a first operation of a user on the first component in a display interface for displaying a first application, a control used to implement a first function, so that the user can initiate an operation on the first control, to quickly implement the first function, and meet a use requirement of the user. In this way, interactive operations of the user are reduced, and user experience is improved.

To achieve the foregoing objectives, the following technical solutions are used in embodiments of this application.

According to a first aspect, a function switching method is provided, and may be applied to an electronic device configured with a first component. Specifically, the method includes: The electronic device first displays a first interface, where the first interface is a display interface of a first application. Then, the electronic device displays a first control in the first interface in response to a first operation when detecting that a user initiates the first operation on the first component, where the first control may be used to implement a first function. Further, the electronic device may perform the first function in response to an operation initiated by the user on the first control. The first component may be, for example, a watch crown, and the first function may be, for example, a timing function, a motion function, or a game function. The first operation may be a clockwise rotation operation, or the first condition may be a counterclockwise rotation operation.

In the method, when the user needs to use the first function by using the electronic device, the user may initiate the first operation on the first component. The electronic device may determine, by detecting the operation initiated by the user on the first component, whether the user needs to use the first function. In addition, when detecting the first operation, the electronic device may display the first control that may be used to implement the first function. In this way, the electronic device can quickly provide the first control to the user in response to the first operation initiated by the user on the first component, so that the user can implement the first application function by using the first control, to meet a use requirement of the user. In this way, interactive operations of the user are reduced, and user experience and playability of the electronic device are also improved.

With reference to the first aspect, in an optional implementation, a program of the first application includes a program of the first function. When the electronic device detects the first operation of the user on the first component, the method further includes: The electronic device invokes the program of the first function in response to the first operation. In this implementation, when the electronic device fails to detect the first operation, the electronic device may not invoke the program of the first function. After detecting the first operation, the electronic device invokes the program of the first function, so that the electronic device can provide the first function to the user. In this way, memory resources of the electronic device can be saved, and energy consumption can also be reduced.

With reference to the first aspect, in an optional implementation, the method further includes: The electronic device hides the first control in response to a second operation when detecting the second operation initiated by the user on the first component. The second operation may be a clockwise rotation operation, or the second operation may be a counterclockwise rotation operation. In an example, when the first operation is a clockwise rotation operation, the second operation may be a counterclockwise rotation operation. In another example, when the first operation is a counterclockwise rotation operation, the second operation may be a clockwise rotation operation.

In this implementation, when the user does not need to use the first function, the second operation may be initiated on the first component. When detecting the second operation, the electronic device may hide the first control. In this way, a display interface of the electronic device can be simplified, and a misoperation of the user can be prevented.

With reference to the first aspect, in an optional implementation, that the electronic device displays a first control in the first interface in response to a first operation includes: The electronic device displays the first control by using a first animation effect. In some implementations, the first animation effect includes one or more of the following animation effects: fade-in/fade-out, scaling, and fly-in/fly-out. In this way, smoothness of displaying the first control by the electronic device can be improved, and user experience can be further improved.

With reference to the first aspect, in an optional implementation, before the electronic device displays the first interface, the method further includes: The electronic device displays prompt information, where the prompt information is used to prompt the user to display the first control by performing the first operation, and/or hide the first control by performing the second operation. In this way, the electronic device may prompt the user that the first control may be displayed or hidden by initiating the operation on the first component, that is, the first function is used or the first function is disabled, so that the user better understands a use function of the electronic device.

With reference to the first aspect, in an optional implementation, the first function may be a timing function. The first control includes one or more of the following: a start control, a reset control, a pause control, a segment-based timing control, and a display control. The start control is used to start timing, the reset control is used to reset timing time, the pause control is used to pause timing, the segment-based timing control is used to continuously perform segment-based timing, and the display control is used to display timing time information. In this way, the electronic device may provide, to the user by using the first control, a plurality of choices that can implement the timing function, to meet different requirements of the user for using the timing function.

With reference to the first aspect, in an optional implementation, when the electronic device is in a screen-off state in an always on display AOD mode, the electronic device may display a second control, where the second control is used to display timing time information. In this way, the electronic device may also present timing time to the user in the screen-off state, to meet a use requirement of the user, and reduce power consumption of the electronic device.

According to a second aspect, a function switching apparatus is provided. The apparatus includes a display module and a processing module. The display module may be configured to display a first interface, where the first interface is a display interface of a first application. The processing module may be configured to display a first control in the first interface in response to a first operation when detecting the first operation initiated by a user on a first component, where the first control is used to implement a first function. The processing module may be further configured to perform the first function in response to an operation initiated by the user on the first control.

The function switching apparatus can quickly provide the first control to the user in response to the operation initiated by the user on the first component, so that the user can implement the first application function, to meet a use requirement of the user. In this way, interactive operations of the user are reduced, and user experience is improved.

According to a third aspect, an electronic device is provided, including a memory and one or more processors. The memory is coupled to the processor, the memory stores computer program code, the computer program code includes computer instructions, and when the computer instructions are executed by the processor, the electronic device is enabled to perform the method according to any one of the first aspect and the optional implementations of the first aspect.

Specifically, the electronic device may be a device that has a watch crown or an operable physical button and a display, such as a smartwatch or a smart band. The watch crown or the operable physical button is used by a user to operate (for example, rotate), so that the electronic device displays/hides a corresponding first control on the display in response to the user operation.

According to a fourth aspect, a computer-readable storage medium is provided, including computer instructions. When the computer instructions are run on an electronic device, the electronic device is enabled to perform the method according to any one of the first aspect and the optional implementations of the first aspect.

According to a fifth aspect, a computer program product is provided. When the computer program product runs on a computer, the computer is enabled to perform the method according to any one of the first aspect and the optional implementations of the first aspect.

It may be understood that for beneficial effects that can be achieved by the electronic device according to the third aspect, the computer-readable storage medium according to the fourth aspect, and the computer program product according to the fifth aspect, refer to beneficial effects according to any one of the first aspect and the possible designs of the first aspect. Details are not described herein again.

### BRIEF DESCRIPTION OF DRAWINGS

FIG. 1 is a diagram of a structure of an electronic device according to an embodiment of this application;
FIG. 2 is a diagram of sliding a display interface by an electronic device according to an embodiment of this application;
FIG. 3 is a diagram of a hardware structure of an electronic device according to an embodiment of this application;
FIG. 4 is a diagram of a software structure of an electronic device according to an embodiment of this application;
FIG. 5 is a schematic flowchart of a function switching method according to an embodiment of this application;
FIG. 6 is a diagram of displaying a first interface by a smartwatch according to an embodiment of this application;
FIG. 7 is a diagram of displaying a first control by a smartwatch according to an embodiment of this application;
FIG. 8 is a diagram of a watch face application setting interface according to an embodiment of this application;
FIG. 9 is a diagram of displaying prompt information by a smartwatch according to an embodiment of this application;
FIG. 10 is a diagram 1 of a display interface of a smartwatch in an AOD mode according to an embodiment of this application;
FIG. 11(a) to FIG. 11(d) are a diagram 2 of a display interface of a smartwatch in an AOD mode according to an embodiment of this application;
FIG. 12 is a diagram of composition of a function switching apparatus according to an embodiment of this application; and
FIG. 13 is a diagram of composition of a chip system according to an embodiment of this application.

### DESCRIPTION OF EMBODIMENTS

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a relative concept in a specific manner for ease of understanding.

With development of wearable device technologies, wearable devices such as a smartwatch and a smart band are increasingly widely applied, and functions are increasingly rich. The smartwatch is used as an example. In addition to displaying time, the smartwatch further has a plurality of functions such as timing, photographing, making a call, receiving and sending information, navigation, step counting, measuring an electrocardiogram, blood pressure, and blood sugar. These functions may be implemented by using applications installed in the smartwatch.

However, when the smartwatch is in a watch face interface that displays time, if a user needs to use the foregoing functions such as timing and photographing, the user usually needs to exit the watch face interface that displays time, and search an application directory of the smartwatch for and start applications that have the functions such as timing and photographing, to implement the corresponding functions. In this way, interactive operations of the user are complex and time-consuming. This reduces human-machine interaction, and also causes that the smartwatch cannot quickly start an application to provide a function that the user needs to use.

Embodiments of this application provide a function switching method, and the method may be applied to an electronic device configured with a first component. Specifically, according to the method provided in embodiments, the electronic device can first display a first interface, where the first interface is a display interface of a first application. Then, the electronic device displays a first control in the first interface when detecting a first operation initiated by a user on the first component, where the first control may be used to implement a first function. Next, the electronic device may further perform the first function in response to an operation initiated by the user on the first control. In this way, in response to the first operation initiated by the user on the first component, the electronic device may display the first control that can be used to implement the first function, so that the user can implement the first function by initiating the operation on the first control, to meet a use requirement of the user, reduce interactive operations of the user, and improve user experience.

The first function in embodiments of this application includes but is not limited to functions such as a timing function, a motion function, a music playback function, a photographing function, a heart rate monitoring function, a navigation function, and a game function. The first component includes but is not limited to a watch crown, a button, a frame, and the like.

For example, the electronic device in embodiments of this application may be a wearable device, a mobile phone, a personal digital assistant (personal digital assistant, PDA), an augmented reality (augmented reality, AR) device, a virtual reality (virtual reality, VR) device, an artificial intelligence (artificial intelligence, AI) device, or the like.

The wearable device includes but is not limited to a smartwatch, a smart band, a smart anklet, smart glasses, a smart helmet, and the like. A specific type of the electronic device is not limited in embodiments of this application.

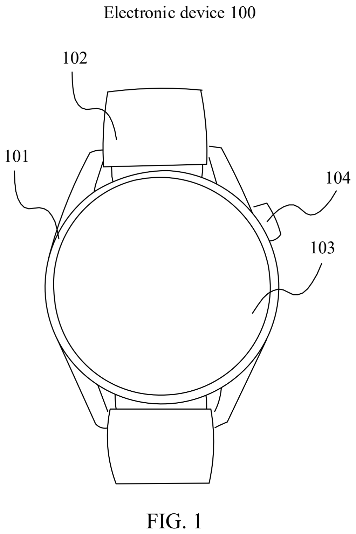

For example, FIG. 1 is a diagram of a structure of an electronic device. The electronic device may be a wearable device. Specifically, the electronic device 100 may include a device body 101 and a wearable component 102. The device body 101 includes a display 103 and a watch crown 104. The wearable component 102 is configured to fasten the device body 101 to a user body (for example, a wrist).

It should be noted that a shape of the device body 101 may be a circular shape, a square shape, or another shape. This is not limited herein in this application.

The display 103 may be disposed on a surface of the device body 101, and is configured to display information and a user touch operation to display other related content. For example, content such as time, a battery level of the device body 101, a Bluetooth indicator, a received message, and motion data of a user is displayed. The display 103 may be a touchscreen. The display 103 may receive a touch operation (for example, a tap operation or a sliding operation) of the user, and display a corresponding page selected by the user.

The watch crown 104 is disposed in an area of the device body 101. For example, the watch crown 104 may be disposed on a side surface of the device body 101, and the watch crown 104 may be pulled out from the device body 101 or inserted into the device body 101. The watch crown 104 may be in a mechanical form. It means that the watch crown 104 may be connected to a sensor for converting physical movement of the watch crown into an electrical signal. The watch crown 104 may have two rotation directions, for example, rotate in a clockwise direction and a counterclockwise direction. The watch crown 104 may alternatively be of a touch type, for example, by using a capacitive touch technology, where the capacitive touch technology may detect whether the user is touching the watch crown. In addition, the watch crown 104 may be further shaken or translated along a track in one or more directions, and the track is along an edge of the device body 101 or at least partially around a periphery of the device body 101. In some embodiments, there may be one or more watch crowns 104, and a visual appearance of the watch crown 104 may be, but does not necessarily need to be, similar to a watch crown of a conventional watch.

The watch crown 104 may be used to implement control on a series of operations such as sliding a display interface and switching a display interface on the display 103.

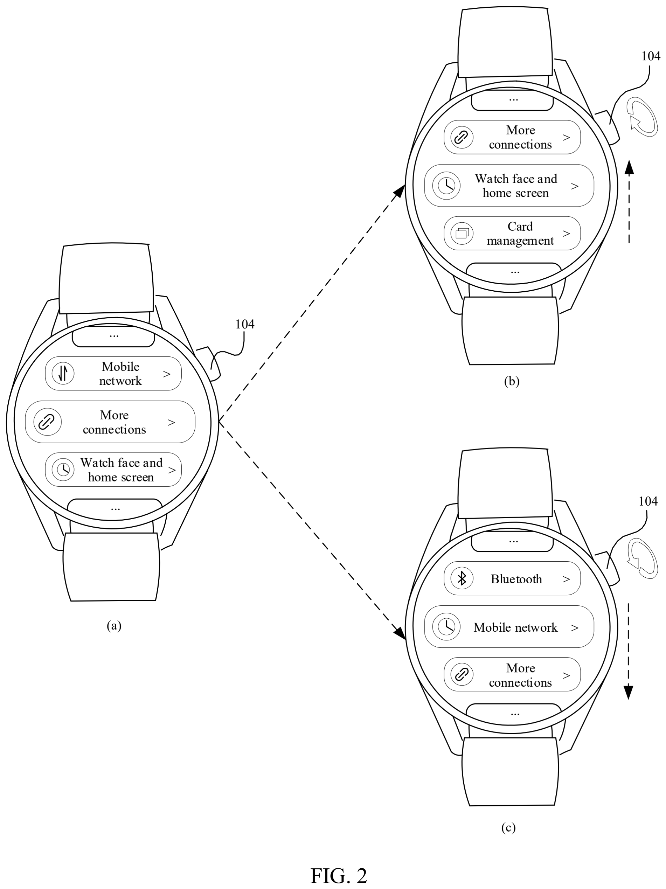

For example, FIG. 2 is a diagram of sliding a display interface by the electronic device 100. As shown in (a) in FIG. 2, a system setting menu list is displayed in a display interface of the display 103. As shown in (b) in FIG. 2, in response to a clockwise rotation operation performed by the user on the watch crown 104, the electronic device 100 may slide upward the display interface, that is, slide upward the system setting menu list. As shown in (c) in FIG. 2, in response to a counterclockwise rotation operation performed by the user on the watch crown 104, the electronic device 100 may slide downward the display interface, that is, slide downward the system setting menu list.

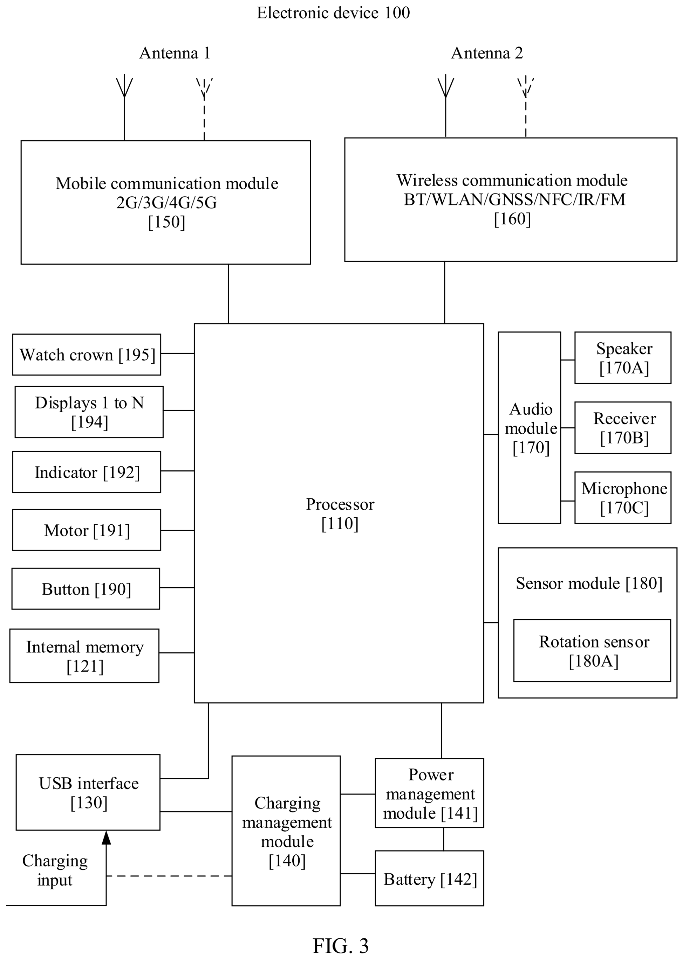

FIG. 3 is a diagram of an example of a hardware structure of an electronic device 100.

The electronic device 100 may include a processor 110, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a sensor module 180, a button 190, a motor 191, an indicator 192, a display 194, a watch crown 195, and the like. The sensor module 180 may include a rotation sensor 180A.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control over instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. Alternatively, the interface may be configured to connect to another electronic device, for example, an AR device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. In this embodiment, the display 194 may be the display 101 shown in FIG. 1. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data or a phone book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement audio functions, for example, music playing and recording, through the audio module 170, the speaker 170A, the receiver 170B, the microphone 170C, the application processor, and the like.

The sensor module 180 may include the rotation sensor 180A, and the rotation sensor 180A may be configured to detect a rotation angle of the watch crown 195. The rotation sensor 180A may be any type of rotation sensor, such as an optical sensor, an encoder, a Honeywell effect sensor, a parser, or any other appropriate sensor that can detect rotation motion of the watch crown 195. In some embodiments, a watch crown shaft connected to the watch crown 195 has a groove, a tooth-like object, or an optical feature that can be detected by the optical sensor. The optical sensor may determine a rotation angle, a rotation direction, a rotation acceleration, and the like of the watch crown 195 based on the detected groove, tooth-like object, or optical feature.

The rotation sensor 180A may detect various information of the rotation motion of the watch crown 195, including a rotation speed, the rotation direction, the rotation acceleration, and the like. The electronic device 100 may implement different functions in response to detecting the foregoing information. For example, a user rotates the watch crown 195 to drive the watch crown shaft to rotate. In some embodiments, the rotation sensor 180A may be an encoder, and at least one opening is formed on the watch crown shaft at a predetermined interval. The encoder includes a light source transmitting end and a light source receiving end. The light source transmitting end emits laser. When the watch crown shaft rotates, a part of the laser emitted by the light source transmitting end may be received by the light source receiving end, and a part of the laser is not received by the light source receiving end. In this case, a light pulse may be formed at the light source receiving end, and an electrical pulse signal is formed when pulse light is irradiated at the light source receiving end. The light source receiving end may input electrical pulse information into the processor, and the processor may determine rotation motion information such as a rotation angle, a rotation speed, and a rotation acceleration of the watch crown shaft based on the optical pulse signal. In this embodiment of this application, a type of the encoder is not limited, and the encoder may be any type of appropriate encoder that detects rotation motion of the watch crown shaft.

In some embodiments, the rotation sensor 180A may be a reflective optical sensor. A reflection mark is set on the watch crown shaft connected to the watch crown 195, and then a light reflection signal is obtained to complete measurement of the rotation angle of the watch crown shaft. A light source of the reflective optical sensor emits light to the watch crown shaft, and the light is incident to the watch crown shaft. When the watch crown shaft rotates, reflectivity of the reflection mark to the light changes, so that the rotation angle of the watch crown shaft can be detected. When the rotation sensor 180A is a reflective optical sensor, the rotation sensor 180A may further detect a radial offset of the watch crown shaft, and the electronic device may determine, based on the radial offset of the watch crown shaft, that the user is in contact with the watch crown 195 and rotates the watch crown 195.

The sensor module 180 may further include a touch sensor, a pressure sensor, a vibration sensor, a motion sensor (which may also be referred to as an inertia sensor, for example, a gyroscope, an accelerometer, or a speed sensor), a location sensor, a temperature sensor, and the like.

It should be understood that, in this embodiment of this application, a type of a sensor included in the sensor module 180 is not limited, and the sensor module may include more or fewer sensors.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

In some embodiments, an example in which a first component is the watch crown 195 is used. When the function switching method in this embodiment of this application is implemented based on the electronic device 100 shown in FIG. 3, the electronic device may display a first interface on the display 194, where the first interface is a display interface of a first application. Then, the processor 110 of the electronic device may detect, through the rotation sensor 180A, whether the user initiates a first operation on the watch crown 195. When detecting the first operation initiated by the user on the watch crown 195, the electronic device may display a first control on the display 194. The first control may be used to implement a first function. In this way, the electronic device can quickly provide the first function to the user.

A software system of the electronic device 100 may have a layered architecture, an event-driven architecture, a microkernel architecture, a micro service architecture, or a cloud architecture. In this embodiment of this application, an Android system with a layered architecture is used as an example to describe a software structure of the electronic device 100.

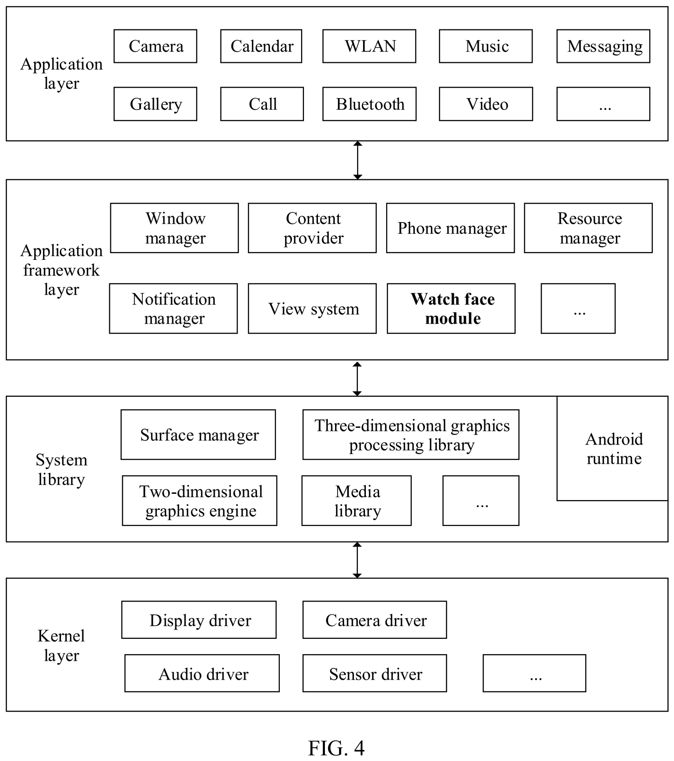

FIG. 4 is a block diagram of a software structure of an electronic device 100 according to an embodiment of this application.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 4, the application package may include a messaging application, a video application, a game application, and the like, specifically, for example, an application such as Camera, Gallery, Calendar, Call, WLAN, Bluetooth, Music, Video, and Messaging.

The application framework layer provides an application programming interface (application programming interface, API) and a programming framework for an application at the application layer. The application framework layer includes some predefined functions.

As shown in FIG. 4, the application framework layer may include a watch face module, a window manager, a content provider, a view system, a phone manager, a resource manager, a notification manager, and the like.

The watch face module is configured to display a first interface, and detect a rotation status of a watch crown; and display a second interface when it is detected that the rotation status of the watch crown meets a first condition.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, hanging up, or the like).

The resource manager provides various resources for an application such as a localized character string, an icon, an image, a layout file, and a video file.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, an electronic device vibrates, or an indicator blinks.

The Android runtime includes a kernel library and a virtual machine. The Android runtime is responsible for scheduling and management of an Android system.

The kernel library includes two parts: a performance function that needs to be invoked in Java language and a kernel library of Android.

The application layer and the application framework layer run on the virtual machine. The virtual machine executes Java files of the application layer and the application framework layer as binary files. The virtual machine is configured to implement functions such as object life cycle management, stack management, thread management, security and exception management, and garbage collection.

The system library may include a plurality of functional modules, for example, a surface manager (surface manager), a media library (Media Library), a three-dimensional graphics processing library (for example, OpenGL ES), a 2D graphics engine (for example, SGL), and a projection module.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and the like. This is not limited in embodiments of this application.

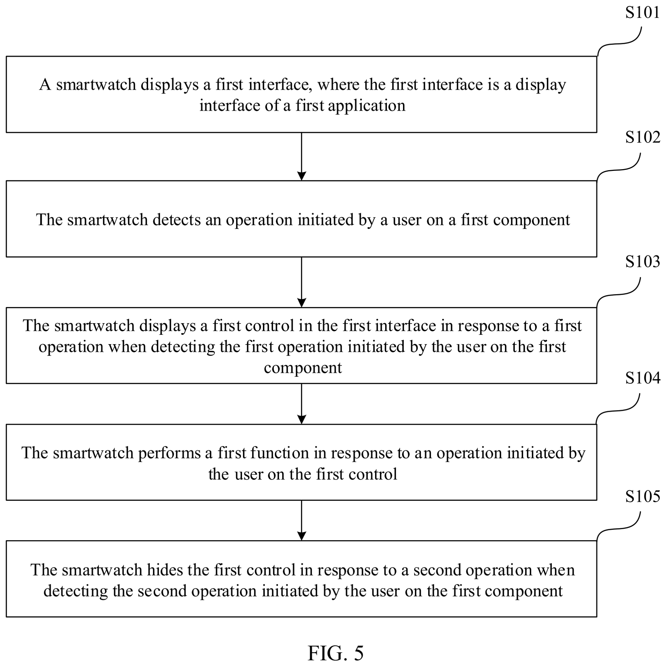

The following describes the function switching method provided in embodiments of this application by using an example in which an electronic device is a smartwatch, a first application is a watch face application, and a first function is a timing function. The smartwatch may have the structures shown in FIG. 2, FIG. 3, and FIG. 4. Specifically, FIG. 5 is a schematic flowchart of a function switching method according to an embodiment of this application. As shown in FIG. 5, the method may include the following S101 to S105.

S101: A smartwatch displays a first interface, where the first interface is a display interface of a first application.

Specifically, when the first application is a watch face application, the first interface may be a display interface of the watch face application.

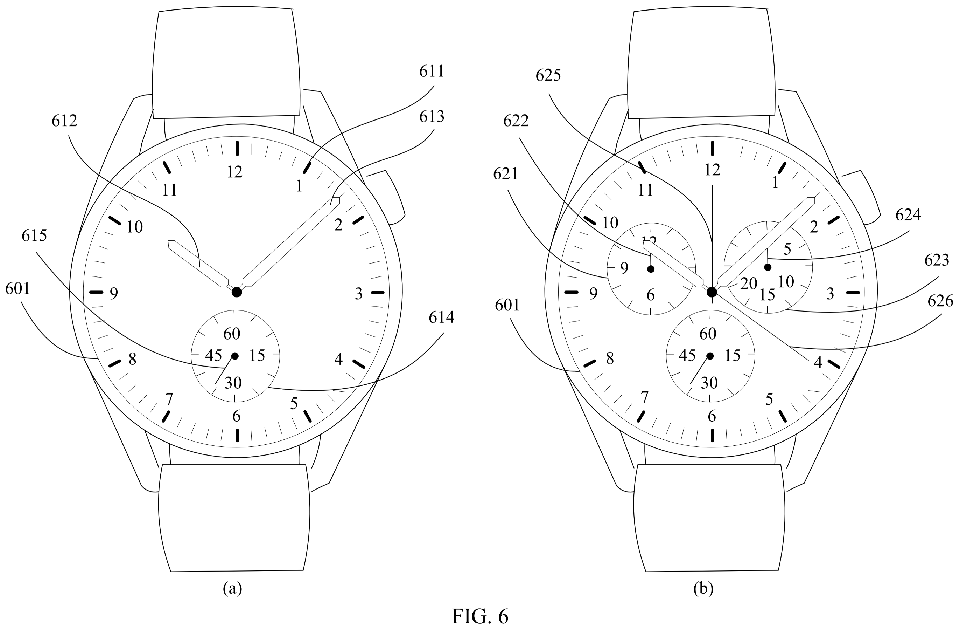

In an implementation, the first interface may include a current time display area. For example, FIG. 6 is a diagram of a first interface according to an embodiment of this application. As shown in (a) in FIG. 6, the first interface 601 includes a current time display area, and may specifically include a scale value 611 of current time (for example, a scale value in a 12-hour system), an hour pointer 612 of current time, a minute pointer 613 of the current time, a second pointer watch face 614 of the current time, and a second pointer 615 of the current time.

In another implementation, the first interface may further include a cyclometer timing display area. For example, as shown in (b) in FIG. 6, the first interface 601 may further include a cyclometer timing display area, and may specifically include an hour count watch face 621 for cyclometer timing, an hour count pointer 622 for cyclometer timing, a minute count watch face 623 for cyclometer timing, a minute count pointer 624 for cyclometer timing, a second count pointer 625 for cyclometer timing, and a segment pointer 626. In this way, the smartwatch may prompt a user that a timing function is configured for the watch face application, so that the user uses the timing function when required.

In some embodiments, a program of the watch face application may include a program that can implement the timing function (a timing program for short below). When the smartwatch displays the first interface, the timing program is in a non-invoked state. For example, the timing program may be in a ready state (ready state).

S102: The smartwatch detects an operation initiated by the user on a first component.

In this embodiment of this application, the first component may be, for example, a component such as a watch crown, a button, or a frame of the smartwatch. The operation initiated by the user on the first component may be, for example, a rotation operation on the watch crown, a pressing operation on the button (for example, a single-pressing operation or an operation of a plurality of times of consecutive pressing), or a tap operation on the frame (for example, a single-tap operation or an operation of a plurality of consecutive taps).

The following uses an example in which the first component is a watch crown and the operation initiated by the user on the watch crown is a rotation operation for description.

In some application scenarios, when the user needs to use the timing function, the user may perform the rotation operation (for example, the following first operation) that meets a condition on the watch crown, to initiate an instruction for using the timing function to the smartwatch. In this way, the smartwatch may determine, by detecting the rotation operation initiated by the user on the watch crown, whether the user needs to use the timing function.

In some embodiments, the smartwatch may detect, by detecting a rotation status of the watch crown, whether the user initiates the rotation operation on the watch crown. The rotation status of the watch crown is a physical rotation status of the watch crown, and may be specifically a physical rotation status of a watch crown shaft. For example, the rotation status of the watch crown may include clockwise rotation or counterclockwise rotation.

In an implementation, the diagram of the hardware structure shown in FIG. 3 is used as an example. The smartwatch may detect the rotation status of the watch crown through the rotation sensor 180A. In an example in which the rotation sensor 180A is an optical sensor, the optical sensor may detect a rotation direction of the watch crown shaft connected to the watch crown, so that the smartwatch may determine the rotation status of the watch crown based on the rotation direction.

S103: The smartwatch displays a first control in the first interface in response to the first operation when detecting the first operation initiated by the user on the first component.

In this embodiment of this application, the first operation may be a clockwise rotation operation or a counterclockwise rotation operation. The first operation may be preset on the smartwatch, or the first operation may be set for the smartwatch in response to a setting operation performed by the user on the first operation. This is not specifically limited in this application.

In some embodiments, when the program of the watch face application includes the timing program, and the smartwatch detects the first operation initiated by the user on the first component, the smartwatch may invoke the timing program into a memory in response to the first operation, and execute the timing program, to implement the timing function.

Further, after executing the timing program, the smartwatch may display the first control in the first interface. In addition, the smartwatch may further monitor and respond to an operation initiated by the user on the first control, so that the user can implement the timing function by using the first control. In this way, when the user needs to use the timing function, the user may perform the first operation (for example, the clockwise rotation operation) on the watch crown, to trigger the smartwatch to quickly display the first control that can implement the timing function, thereby providing the timing function to the user and improving user experience.

In some embodiments, the first control may include a control that can implement the timing function. For example, the first control may include a start control and/or a reset control. The start control may be used to start timing (for example, including starting timing for the first time and continuing to start timing in a timing pause state), and the reset control may be used to reset (clear) timing time, to perform timing again.

After timing is started, to enable the smartwatch to provide more timing functions, the first control may further include a pause control and/or a segment-based timing control. The pause control may be used to pause current timing, and the segment-based timing control may be used to continuously perform timing for a plurality of times (a plurality of segments).

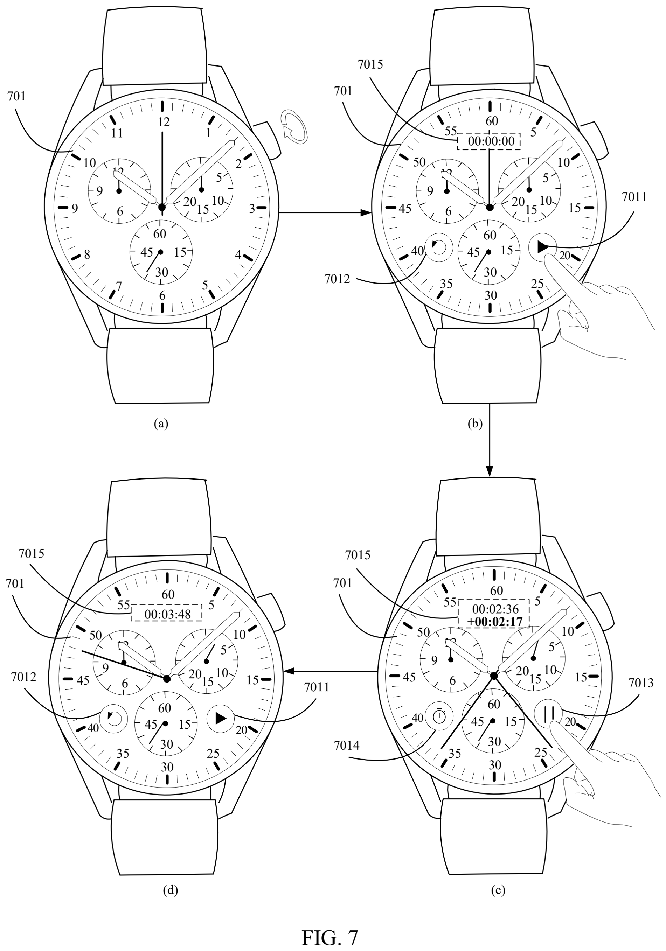

For example, FIG. 7 is a diagram of displaying a first control by a smartwatch according to an embodiment of this application. The first interface shown in (b) in FIG. 6 is used as an example. As shown in (a) in FIG. 7, the smartwatch displays a first interface 701. When the smartwatch displays the first interface 701, if the smartwatch detects the first operation initiated by the user on the first component, as shown in (b) in FIG. 7, the smartwatch may display the first control in the first interface 701, for example, may include a start control 7011 and a reset control 7012.

After the user taps the start control 7011 to start timing, as shown in (c) in FIG. 7, the smartwatch may replace the start control 7011 and the reset control 7012 with a pause control 7013 and a segment-based timing control 7014. For example, the smartwatch may replace the start control 7011 with the pause control 7013, and replace the reset control 7012 with the segment-based timing control 7014. Alternatively, the smartwatch may replace the start control 7011 with the segment-based timing control 7014, and replace the reset control 7012 with the pause control 7013. A correspondence for control replacement is not specifically limited in this application.

In another implementation, when the smartwatch displays the pause control 7013 and the segment-based timing control 7014, after the user taps the pause control 7013 to pause current timing, as shown in (d) in FIG. 7, the smartwatch may replace the pause control 7013 and the segment-based timing control 7014 with the start control 7011 and the reset control 7012 again. In this way, the user performs an operation of continuing to start timing in a timing pause state, or performs a reset operation.

In some embodiments, to present timing time to the user in real time, and improve user experience, the first control may further include a display control, and the display control may be configured to display timing time. As shown in (b), (c), and (d) in FIG. 7, the first interface 701 may further include a display control 7015, and the display control 7015 may be used to display current timing time.

In some embodiments, when the user performs segment-based timing by using the segment-based timing control, in an example, the display control may further display timing time of each segment. In another example, as shown in (c) in FIG. 7, the display control 7015 may further display current timing time and timing time of a previous segment. In this way, the smartwatch can improve brevity of displaying the timing time by the display control, while displaying segment-based timing time.

In some embodiments, the smartwatch may further display a cyclometer timing display area in the first interface. For details about the cyclometer timing display area, refer to the cyclometer timing display area shown in (b) in FIG. 6. In addition, to enable the user to intuitively learn of a second change status of timing by using the smartwatch, the cyclometer timing display area may further include a second scale value (for example, scale values of 60 seconds) for cyclometer timing, to improve user experience.

In an implementation, when the first interface includes the current time display area and the cyclometer timing display area, the smartwatch may add a first control to the first interface, and replace a scale value of current time in the first interface with a second scale value for cyclometer timing.

In another implementation, when the first interface includes the current time display area, the smartwatch may replace the current time display area with the cyclometer timing display area in the first interface, and add a first control to the first interface.

In some embodiments, to improve smoothness of displaying the first control by the smartwatch, the smartwatch may display the first control by using a first animation effect. The first animation effect is one or more of the following animation effects: fade-in/fade-out, scaling, and fly-in/fly-out.

In an implementation, the smartwatch may add display content (for example, the first control) by using the first animation effect, delete display content (for example, the current time display area), replace display content (for example, replace the scale value of the current time with the second scale value for cyclometer timing), and the like.

For example, when the first interface includes the current time display area, the smartwatch may gradually hide the current time display area until the current time display area disappears, and then gradually display the cyclometer timing display area until the cyclometer timing display area is entirely displayed. In addition, the smartwatch may further gradually display the first control (for example, the start control or the reset control) in the first interface.

S104: The smartwatch performs the first function in response to the operation initiated by the user on the first control.

Further, after the smartwatch displays the first control, the smartwatch may perform, in response to the operation initiated by the user on the first control, the timing function corresponding to the first control.

Specifically, the display interface of the smartwatch shown in FIG. 7 is used as an example. As shown in (b) in FIG. 7, the display interface of the smartwatch includes the start control 7011 and the reset control 7012. When the user needs to start timing, the user may initiate a tap operation on the start control 7011. The smartwatch starts timing in response to the tap operation of the user on the start control 7011, and may display current timing time in real time in the display control 7015.

In addition, after the smartwatch starts timing, as shown in (c) in FIG. 7, the smartwatch may replace the start control 7011 with the pause control 7013, and replace the reset control 7012 with the segment-based timing control 7014. When the user needs to perform segment-based timing, the user may initiate a tap operation on the segment-based timing control 7014. The smartwatch performs segment-based timing in response to the tap operation of the user on the segment-based timing control 7014, and may display timing time of segment-based timing in the display control 7015.

When the user needs to pause timing, the user may initiate a tap operation on the pause control 7013. The smartwatch pauses timing in response to the tap operation of the user on the pause control 7013. In addition, after the smartwatch pauses timing, as shown in (d) in FIG. 7, the smartwatch may replace the pause control 7013 with the start control 7011, and replace the segment-based timing control 7014 with the reset control 7012.

When the user needs to continue to start timing, the user may initiate a tap operation on the start control 7011. The smartwatch continues to start timing in response to the tap operation of the user on the start control 7011. When the user needs to reset timing time, the user may initiate a tap operation on the reset control 7012. The smartwatch resets the timing time in response to the tap operation of the user on the reset control 7012, to perform next timing.

S105: The smartwatch hides the first control in response to a second operation when detecting the second operation initiated by the user on the first component.

In this embodiment of this application, after displaying the first control, the smartwatch may continue to detect an operation initiated by the user on the first component. An example in which the first component is a watch crown and the operation initiated by the user on the watch crown is a rotation operation is still used.

The smartwatch may detect, by detecting a rotation status of the watch crown, whether the user initiates the second operation on the watch crown. If the second operation initiated by the user on the watch crown is detected, the smartwatch may hide the first control in response to the second operation.

In some embodiments, in response to the second operation, the smartwatch may stop executing the timing program and hide the first control. Further, the smartwatch may further clear the timing program invoked in the memory, to save a memory space resource of the smartwatch.

In this way, when the user does not need to use the timing function (that is, the user needs to disable the timing function), the user may initiate the second operation on the watch crown, to trigger the smartwatch to quickly hide the first control, so as to display a simpler first interface to the user. In addition, the user does not perform a misoperation (mistaken tap) on the first control when the timing function is not needed, to improve user experience.

The second operation may be a clockwise rotation operation or a counterclockwise rotation operation. Specifically, when the first operation is a clockwise rotation operation, the second operation may be a counterclockwise rotation operation. When the first operation is a counterclockwise rotation operation, the second operation may be a clockwise rotation operation. The second operation may be preset on the smartwatch, or the second operation may be set for the smartwatch in response to a setting operation performed by the user on the second operation. This is not specifically limited in this application.

In some embodiments, to improve smoothness of hiding the first control by the smartwatch, the smartwatch may hide the first control by using a second animation effect. The second animation effect is one or more of the following animation effects: fade-in/fade-out, scaling, and fly-in/fly-out. The second animation effect may be the same as the first animation effect, or may be different from the first animation effect. Specifically, for an implementation of the second animation effect, refer to the implementation of the first special effect. Details are not described herein again.

In some embodiments, to avoid a case in which timing fails because the smartwatch hides the first control due to a misoperation performed by the user on the watch crown in a timing process of the smartwatch, after the smartwatch starts timing in response to the tap operation of the user on the start control, that is, when the smartwatch is in the timing process, the smartwatch may not detect an operation initiated by the user on the watch crown, that is, does not detect the rotation status of the watch crown, or does not hide the first control when detecting that the rotation status of the watch crown meets a second condition. In this way, it can be ensured that the smartwatch accurately implements the timing function.

In some embodiments, when the smartwatch displays the first control and is in a non-timing state, for example, the smartwatch is in a timing reset state, or the smartwatch is in a timing pause state, if time in which the smartwatch is in the non-timing state reaches a time threshold (for example, 2 minutes), that is, time in which the user does not initiate an operation on the smartwatch reaches the time threshold, the smartwatch may reset timed timing time, and hide the first control. That the user does not initiate an operation on the smartwatch may include: The user does not initiate a tap operation on the first control, or the user does not initiate a rotation operation on the watch crown. In this way, when time in which the user does not have a use requirement and does not operate the smartphone reaches the time threshold, the smartwatch may hide the first control, so that a misoperation of the user can be further prevented.

In some embodiments, the first interface displayed by the smartwatch in S101 may be a display interface of the first application preset in the smartwatch, that is, may be a display interface of the watch face application preset in the smartwatch.

In some embodiments, the first application may alternatively be determined by the smartwatch in response to a setting operation initiated by the user. Specifically, a plurality of first applications may be preset in the smartwatch, for example, a plurality of watch face applications are preset. The user may determine a watch face application according to a requirement, and initiate a setting operation corresponding to the watch face application to the smartwatch, so that the smartwatch receives the setting operation of the user, determines the watch face application, and displays a display interface corresponding to the watch face application, that is, a first interface.

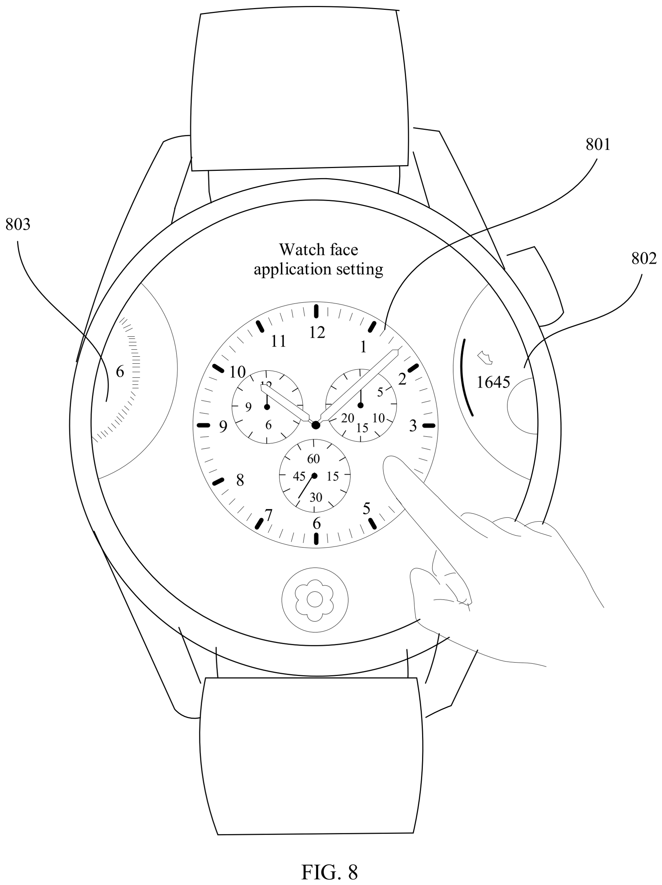

For example, FIG. 8 is a diagram of a watch face application setting interface according to an embodiment of this application. As shown in FIG. 8, a smartwatch may provide a watch face application setting interface. A plurality of watch face applications are displayed in a thumbnail image manner in the watch face application setting interface of the smartwatch, for example, a cyclometer watch face application 801 with a timing function, a motion watch face application 802 with a step counting function, and a game watch face application 803 with a game function. When a first function is a timing function, a user may tap a display area of the cyclometer watch face application 801, to initiate, to the smartwatch, a setting operation of selecting the timing function, so that the smartwatch can display a display interface corresponding to the cyclometer watch face application.

In some embodiments, after the user initiates the setting operation and before the smartwatch displays a first interface, the smartwatch may display prompt information. The prompt information may be used to prompt the user that a first control (or the first function) may be displayed by performing a first operation, and/or the first control (or the first function) may be hidden by performing a second operation.

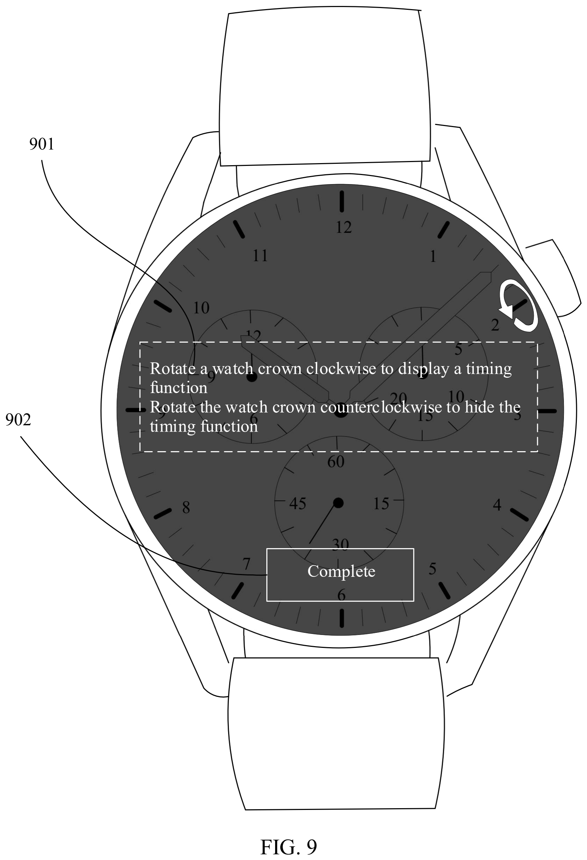

FIG. 9 is a diagram of displaying prompt information by a smartwatch according to an embodiment of this application. As shown in FIG. 9, in an example in which a user selects a cyclometer watch face with a timing function, the smartwatch may display prompt information 901 in a display interface. Content of the prompt information 901 may be as follows: Rotate a watch crown clockwise to display a timing function, and rotate the watch crown counterclockwise to hide the timing function. Alternatively, content of the prompt information 901 may be as follows: Rotate a watch crown clockwise to display a timing control, and rotate the watch crown counterclockwise to hide the timing control. In this way, the user may be prompted that the timing control (or the timing function) may be used or hidden by rotating the watch crown.

In some embodiments, the smartwatch may keep a state of displaying the foregoing prompt information, and display a first interface after the user confirms the prompt information. In this way, the smartwatch can ensure that the user browses the prompt information and knows that a first control can be displayed or hidden by rotating the watch crown.

For example, still with reference to FIG. 9, the user may alternatively tap a "Complete" control 902, to initiate a confirmation operation to the smartwatch. The "Complete" control is an example name. A name of the control is not limited in this embodiment of this application, and may be alternatively replaced with a name having a same or similar function, such as "Acknowledge" or "Receive".

In some embodiments, the smartwatch may further have an always on display (always on display, AOD) function, that is, the smartwatch supports an AOD mode. Specifically, the smartwatch in the AOD mode may include a screen-on state and a screen-off state. The screen-on state is a working state of the smartwatch, that is, a display of the smartwatch keeps in an always on state. The screen-on state may be a sleep state (or referred to as a screen-locked state) of the smartwatch, that is, a partial area of the display of the smartwatch keeps in the always on state, to display target information (for example, time and notification information). In this way, the smartwatch can implement an AOD function, and power consumption of the smartwatch can also be reduced.

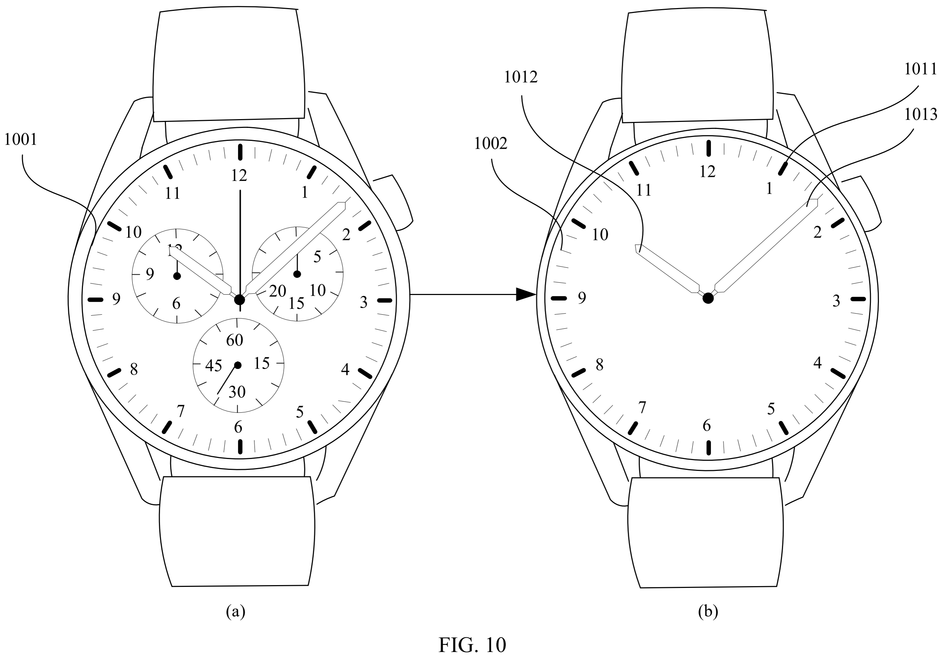

In an implementation, when the smartwatch displays the first interface in the screen-on state, for example, FIG. 10 is a diagram 1 of a display interface of a smartwatch in an AOD mode according to an embodiment of this application. As shown in (a) in FIG. 10, similar to the first interface displayed in (b) in FIG. 6, a first interface 1001 displayed by the smartwatch includes a scale value of current time, an hour pointer of the current time, a minute pointer of the current time, a second pointer watch face of the current time, a second pointer of the current time, an hour count watch face for cyclometer timing, an hour count pointer for cyclometer timing, a minute count watch face for cyclometer timing, a minute count pointer for cyclometer timing, and a second count pointer for cyclometer timing.

The smartwatch in the screen-off state may display a second interface. As shown in (b) in FIG. 10, a second interface 1002 displayed by the smartwatch includes a scale value 1011 of current time, an hour pointer 1010 of the current time, and a minute pointer 1013 of the current time. In addition, a background area of the second interface 1002 is dark (for example, black), and display areas of the scale value 1011 of the current time, the hour pointer 1012 of the current time, and the minute pointer 1013 of the current time are bright (for example, white). In this way, power consumption of the smartwatch in the AOD mode can be reduced.

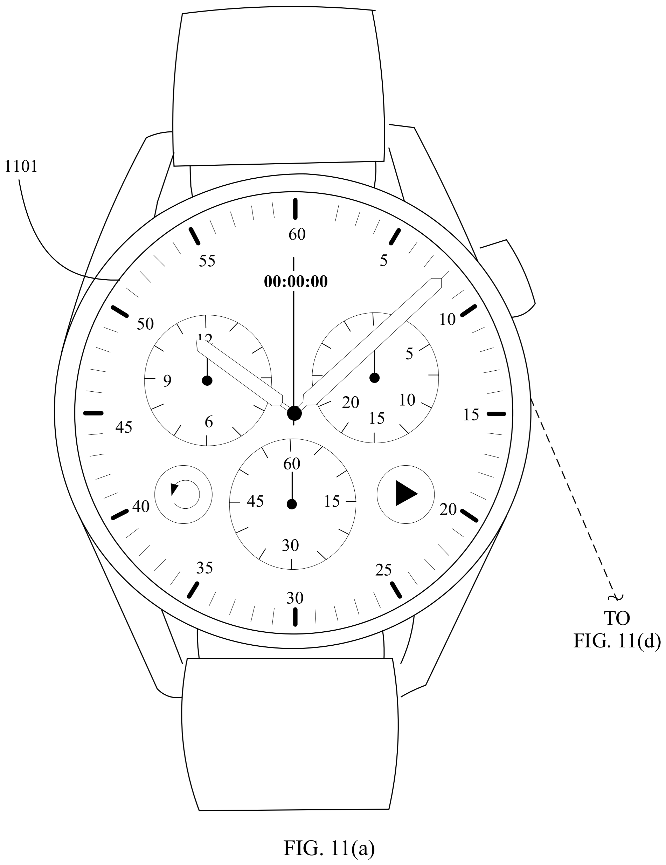

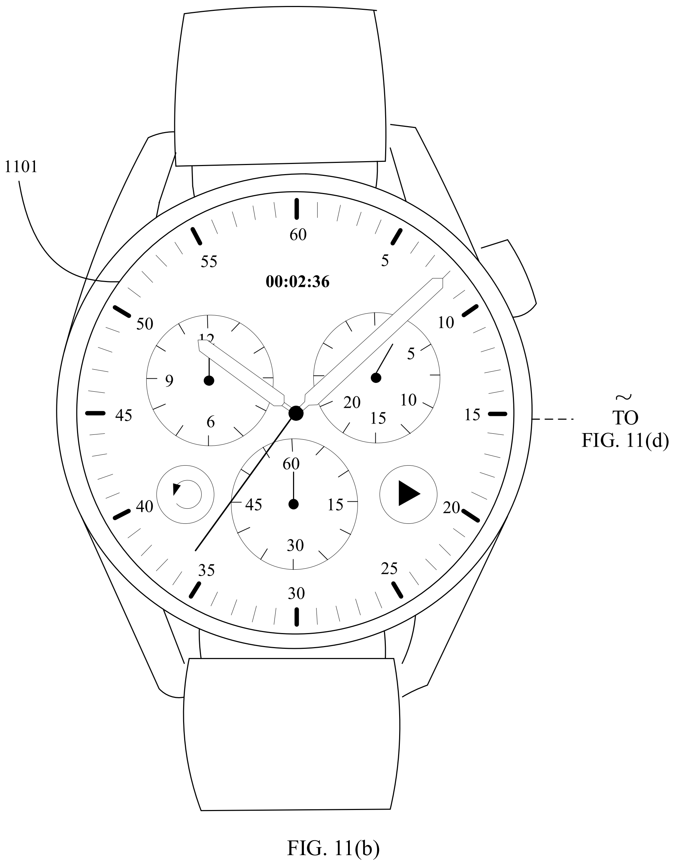

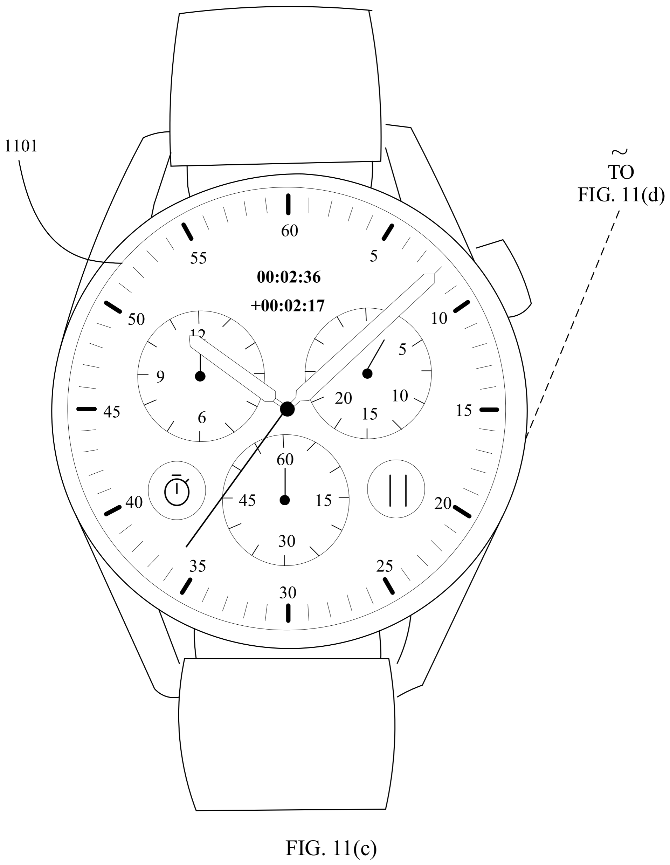

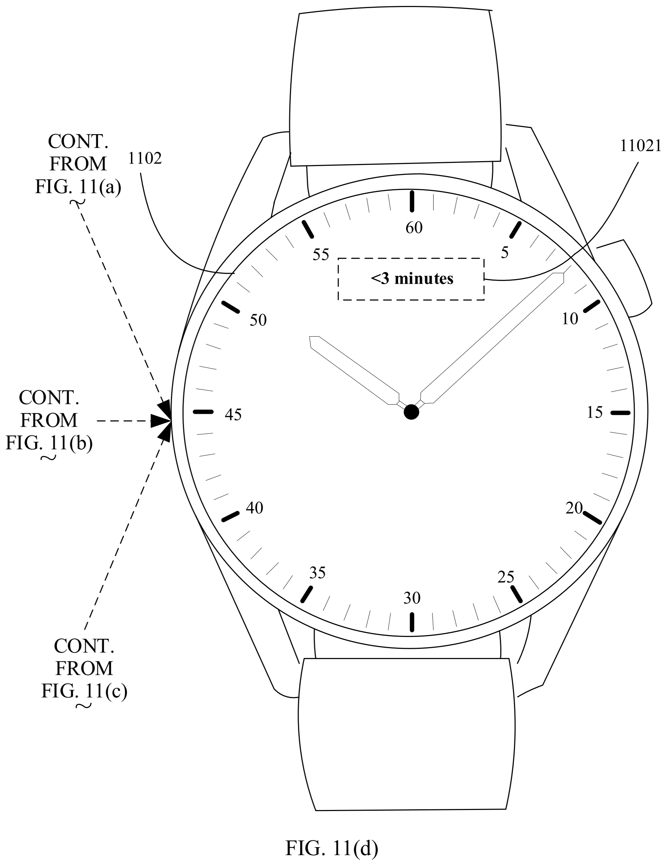

In another implementation, when the smartwatch in the screen-on state displays the first control in the first interface, and the smartwatch performs a corresponding timing function in response to an operation initiated by the user on the first control,
for example, FIG. 11(a) to FIG. 11(d) are a diagram 2 of a display interface of a smartwatch in an AOD mode according to an embodiment of this application. As shown in FIG. 11(a), the smartwatch is in a non-timing start state (that is, a timing time reset state) in a first interface 1101 in which a first control is displayed. As shown in FIG. 11(b), the smartwatch is in a timing pause state in the first interface 1101 in which the first control is displayed. As shown in FIG. 11(c), the smartwatch is in a timing state in the first interface 1101 in which the first control is displayed is in a timing state, or the like. As shown in FIG. 11(d), the smartwatch may display a second interface 1102 in a screen-off state. The second interface 1102 may include at least a second control 11021, and the second control 11021 is used to display information.

In this way, when the smartwatch is in the non-timing start state shown in FIG. 11(a) and the timing pause state shown in FIG. 11(b), in an implementation, the second control may display timing time information to prompt the user that the smartwatch is currently in a state of a timing function. In another implementation, the second control may display a timing icon to prompt the user that the smartwatch is currently in a state of a timing function. In another implementation, the second control may further prompt the user by displaying text information such as the "Timing function". Content of the text information displayed by the second control is not specifically limited in this application.

When the smartwatch is in the timing state shown in FIG. 11(c), the second control may display timing time information, so that the smartwatch can also present the timing time information to the user in the screen-off state. This meets a use requirement of the user, and also reduces power consumption of an electronic device.

In some embodiments, a rule for displaying the timing time information by the second control may be as follows: If current timing time ab:cd:ef is less than one hour, "<cd+1 minutes" is displayed. If current timing time ab:cd:ef is greater than or equal to one hour, "<ab hours cd+1 minutes" is displayed, where ab represents an hour count of the current timing time, cd represents a minute count of the current timing time, and ef represents a second count of the current timing time. In this way, the timing time information displayed by the smartwatch in the screen-off state can be simplified, and power consumption of the electronic device can be further reduced.

In an example, as shown in FIG. 11(c), current timing time 00:02:36 displayed in the first interface 1101 of the smartwatch is used as an example. As shown in FIG. 11(d), the smartwatch displays the second interface 1102 in the screen-off state, and displays timing time "<3 minutes" by using the second control 11021.

In another example, current timing time 01:51:18 displayed in the display interface of the smartwatch is used as an example. The smartwatch displays the second interface in the screen-off state, and displays timing time "<1 hour 52 minutes" by using the second control.

In some embodiments, an example in which the electronic device is a smartwatch, the first component is a watch crown, the first application is a watch face application, and the first function is a game function is used. A function switching method provided in embodiments of this application may include:

The smartwatch first displays a first interface, where the first interface may be a display interface of the watch face application. A program of the watch face application may include a program that can implement the game function (a game program for short below).

Then, the smartwatch detects an operation initiated by a user on a watch crown. When detecting a clockwise rotation operation initiated by the user on the watch crown, in response to the clockwise rotation operation, the smartwatch invokes and executes the game program, and displays a first control in the first interface. The first control may be used to implement the game function. For example, the first control may include a start control, an exit control, a pause control, a move control, and the like. The start control may be used to start a game, the exit control may be used to exit the game, the pause control may be used to pause the game, and the move control may be used to control movement of a target object in the game. The move control may include, for example, a move upward control, a move downward control, a move leftward control, a move rightward control, and a joystick control.

Then, in response to an operation initiated by the user on the first control, the smartwatch performs the game function corresponding to the first control. For example, the smartwatch may start the game in response to a tap operation of the user on the start control. In response to a tap operation of the user on the move upward control, the smartwatch may control the target object in the game to move upward.

In this way, the smartwatch can quickly provide, to the user in response to the clockwise rotation operation initiated by the user on the watch crown, the first control that can implement the game function, so that the smartwatch can implement the game function in response to the operation of the user on the first control, to improve playability of the smartwatch and user experience.

Further, when detecting a counterclockwise rotation operation initiated by the user on the watch crown, in response to the counterclockwise rotation operation, the smartwatch stops executing the game program, and hides the first control. In this way, the first interface displayed by the smartwatch can be simplified, and a misoperation of the user can be prevented.

In some embodiments, an example in which the electronic device is a smartwatch, the first component is a watch frame, the first application is an album application, the first function is an editing function, the first operation is a single-tap operation, and the second operation is an operation of two consecutive taps (a double-tap operation below) is used. A function switching method provided in embodiments of this application may include:

The smartwatch first displays a first interface, where the first interface may be a display interface of the album application. A program of the watch face application may include a program that can implement the editing function (an editing program for short below).

Then, the smartwatch detects an operation initiated by a user on the watch frame. When detecting that the user initiates the single-tap operation on the watch frame, in response to the single-tap operation, the smartwatch invokes and executes the editing program, and displays a first control in the first interface. The first control may be used to implement the editing function. For example, the first control may include a crop control, a rotate control, a paintbrush control, an erase control, and the like. The crop control may be used to crop a picture, the rotate control may be used to rotate a direction of the picture, the paintbrush control may be used to draw in the picture, and the erase control may be used to erase a drawing generated by the paintbrush control.

Then, in response to an operation initiated by the user on the first control, the smartwatch performs the editing function corresponding to the first control. For example, the smartwatch may rotate the picture in response to a tap operation of the user on the rotate control. The smartwatch may clear a drawing on a sliding track based on the sliding track in response to a tap and sliding operation performed by the user on the erase control.

In this way, the smartwatch can quickly provide, to the user in response to the single-tap operation initiated by the user on the watch frame, the first control that can implement the editing function, so that the smartwatch can implement the editing function of the picture in response to the operation of the user on the first control, to improve playability of the smartwatch and user experience.

Further, when detecting that the user initiates the double-tap operation on the watch frame, in response to the double-tap operation, the smartwatch stops executing the editing program, and hides the first control. In this way, the first interface displayed by the smartwatch can be simplified, and a misoperation of the user can be prevented.

It can be learned that, according to the technical solution provided in the foregoing embodiment, the smartwatch can determine, by detecting the operation initiated by the user on the first component, whether the user needs to use the first function. When detecting that the user initiates the first operation on the first component, the smartwatch may display the first control used to implement the first function. In this way, the smartwatch can quickly provide the first control to the user in response to the first operation initiated by the user on the first component, so that the user can implement the first application function, to meet a use requirement of the user. In this way, interactive operations of the user are reduced, and user experience and playability of the smartwatch are also improved.

Further, when the smartwatch detects that the user initiates the second operation on the first component, the smartwatch may hide the first control used to implement the first function. In this way, a display interface of the smartwatch can be simplified, and a misoperation of the user can be prevented.

It may be understood that, to implement the foregoing functions, the foregoing electronic device (for example, the smartwatch) includes corresponding hardware structures and/or software modules for performing the functions. A person skilled in the art should easily be aware that, in combination with algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be grouped into functional modules based on the foregoing method examples. For example, each functional module may be obtained through grouping based on each corresponding function, or two or more functions may be integrated into one processing module. The integrated module may be implemented in a form of hardware, or may be implemented in a form of a software functional module. It should be noted that, in embodiments of this application, module grouping is an example and is merely logical function grouping. During actual implementation, there may be another grouping manner.

An embodiment of this application further provides a function switching apparatus. The function switching apparatus may be the foregoing electronic device (such as the smartwatch), a chip in the electronic device, or a system on chip. The function switching apparatus may be configured to perform a function of the smartwatch in the foregoing embodiments.

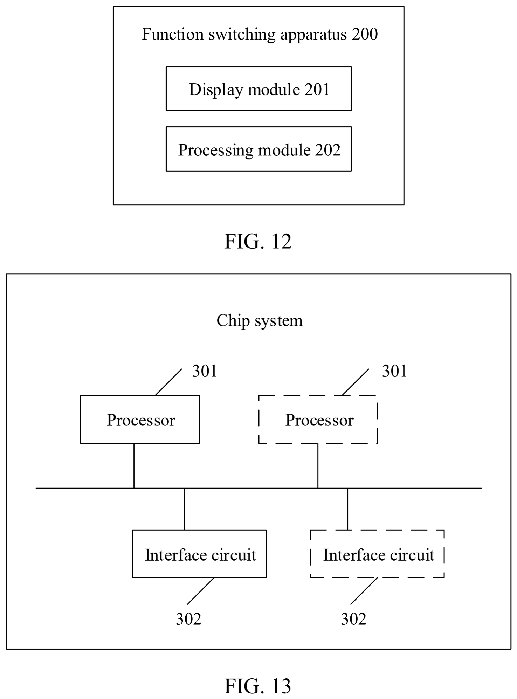

In a possible implementation, as shown in FIG. 12, the function switching apparatus 200 may include a display module 201 and a processing module 202. Specifically, the display module 201 may be configured to display a first interface, where the first interface is a display interface of a first application. The processing module 202 may be configured to display a first control in the first interface in response to a first operation when detecting the first operation initiated by a user on a first component, where the first control may be used to implement a first function. The processing module 202 may be further configured to perform the first function in response to an operation initiated by the user on the first control.

An embodiment of this application further provides an electronic device. The electronic device may include a display, a memory, and one or more processors. The display and the memory are coupled to the processor. The memory is configured to store computer program code. The computer program code includes computer instructions. When the processor executes the computer instructions, the electronic device may perform functions or steps performed by the smartwatch in the foregoing method embodiments. Certainly, the electronic device includes but is not limited to the display, the memory, and the one or more processors.

An embodiment of this application further provides a chip system. The chip system may be used in the electronic device in the foregoing embodiments. As shown in FIG. 13, the chip system includes at least one processor 301 and at least one interface circuit 302. The processor 301 may be a processor in the foregoing electronic device. The processor 301 and the interface circuit 302 may be interconnected through a line. The processor 301 may receive computer instructions from a memory of the electronic device through the interface circuit 302, and execute the computer instructions. When the computer instructions are executed by the processor 301, the electronic device is enabled to perform steps performed by the smartwatch in the foregoing embodiments. Certainly, the chip system may further include another discrete component. This is not specifically limited in this embodiment of this application.

An embodiment of this application further provides a computer-readable storage medium, configured to store computer instructions run by the foregoing electronic device (such as the smartwatch).

An embodiment of this application further provides a computer program product, including computer instructions run by the foregoing electronic device (such as the smartwatch).

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of methods in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A function switching method, applied to an electronic device configured with a first component, wherein the method comprises:
displaying a first interface, wherein the first interface is a display interface of a first application;
displaying a first control in the first interface in response to a first operation when detecting that a user initiates the first operation on the first component, wherein the first control is used to implement a first function; and
performing the first function in response to an operation initiated by the user on the first control.

2. The method according to claim 1, wherein a program of the first application comprises a program of the first function; and
when the first operation of the user on the first component is detected, the method further comprises:
invoking the program of the first function in response to the first operation.

3. The method according to claim 1 or 2, wherein the method further comprises:
hiding the first control in response to a second operation when detecting that the user initiates the second operation on the first component.

4. The method according to claim 3, wherein
the first operation is a clockwise rotation operation, and the second operation is a counterclockwise rotation operation; or
the first operation is a counterclockwise rotation operation, and the second operation is a clockwise rotation operation.

5. The method according to any one of claims 1 to 4, wherein the displaying the first control in the first interface in response to the first operation comprises:
displaying the first control with a first animation effect.

6. The method according to claim 5, wherein the first animation effect comprises one or more of the following animation effects: fade-in/fade-out, scaling, and fly-in/fly-out.

7. The method according to any one of claims 1 to 6, wherein before displaying the first interface, the method further comprises:
displaying prompt information, wherein the prompt information is used to prompt the user to display the first control by performing the first operation, and/or hide the first control by performing the second operation.

8. The method according to any one of claims 1 to 7, wherein the first function is a timing function;
the first control comprises one or more of the following: a start control, a reset control, a pause control, a segment-based timing control, and a display control; and
the start control is used to start timing, the reset control is used to reset timing time, the pause control is used to pause timing, the segment-based timing control is used to continuously perform segment-based timing, and the display control is used to display timing time information.

9. The method according to claim 8, wherein when the electronic device is in a screen-off state in an always on display AOD mode, displaying a second control, wherein the second control is used to display timing time information.

10. A function switching apparatus, wherein the apparatus comprises a display module and a processing module, wherein
the display module is configured to display a first interface, wherein the first interface is a display interface of a first application;
the processing module is configured to display a first control in the first interface in response to a first operation when detecting that a user initiates the first operation on the first component, wherein the first control is used to implement a first function; and
the processing module is further configured to perform the first function in response to an operation initiated by the user on the first control.

11. An electronic device, comprising a memory and one or more processors, wherein the memory is coupled to the processor, the memory stores computer program code, the computer program code comprises computer instructions, and when the computer instructions are executed by the processor, the electronic device is enabled to perform the method according to any one of claims 1 to 9.

12. A computer-readable storage medium, comprising computer instructions, wherein when the computer instructions are run on an electronic device, the electronic device is enabled to perform the method according to any one of claims 1 to 9.
